Europäisches Patentamt

European Patent Office

Office européen des brevets

(19)

(11) Numéro de publication: **0 008 275**
**B1**

(12) **FASCICULE DE BREVET EUROPEEN**

(45) Date de publication du fascicule du brevet: **24.03.82**

(21) Numéro de dépôt: **79400566.0**

(22) Date de dépôt: **10.08.79**

(51) Int. Cl.³: **G 05 D 23/24, H 01 C 7/02, H 05 B 3/14, G 01 K 7/12**

(54) **Connecteur enfichable comportant un dispositif autorégulé, destiné à stabiliser en température au moins un point de connexion.**

(30) Priorité: **11.08.78 FR 7823674**
**26.01.79 FR 7902097**

(43) Date de publication de la demande:
**20.02.80 Bulletin 80/4**

(45) Mention de la délivrance du brevet:
**24.03.82 Bulletin 82/12**

(84) Etats contractants désignés:
**BE DE GB**

(56) Documents cités:
FR - A - 1 410 015
FR - A - 1 510 776
FR - A - 1 595 972
FR - A - 2 281 695
FR - A - 2 287 758
US - A - 3 414 704
US - A - 3 632 964
US - A - 3 673 538
US - A - 3 878 357
US - A - 4 014 822

(73) Titulaire: **THOMSON-CSF**
**173, Boulevard Haussmann**
**F-75360 Paris Cedex 08 (FR)**

(72) Inventeur: **Buchy, François**
**"THOMSON-CSF" - SCPI 173, bld Haussmann**
**F-75360 Paris Cedex 08 (FR)**
Inventeur: **Cadier, Jacques**
**"THOMSON-CSF" - SCPI 173, bld Haussmann**
**F-75360 Paris Cedex 08 (FR)**

(74) Mandataire: **Giraud, Pierre et al,**
**THOMSON-CSF SCPI 173, bld Haussmann**
**F-75360 Paris Cedex 08 (FR)**

Courier Press, Leamington Spa, England.

## Connecteur enfichable comportant un dispositif autorégulé, destiné à stabiliser en température au moins un point de connexion

L'invention concerne un dispositif autorégulé, constituant un connecteur enfichable, destiné à stabiliser en température au moins un point de connexion.

On connait, par le brevet américain US—A—3 878 357 délivré à Texas Instruments Incorporated, un dispositif autorégulé en température comprenant une enceinte, dans laquelle se trouvent des résistances à coefficient de température positif (C.T.P.) alimentées en tension électrique constante, les résistances servant à la fois d'éléments chauffants et de régulateurs de température. A cet effet, les résistances sont disposées autour d'une diode que l'on désire maintenir à température constante, la diode étant fixée par un bourrage thermiquement conducteur.

On connait en outre, par le brevet américain US—A—3 673 538 délivré à Texas Instruments Incorporated, un dispositif autorégulé en température dans lequel deux résistances C.T.P. constituent deux cylindres concentriques séparés par un isolant et comprenant à l'intérieur du plus petit d'entre eux une enceinte autorégulée en température. Les deux résistances ont des températures de transition différentes et des coefficients de température sensiblement égaux.

Enfin, on connait, par le brevet français FR—A—1 595 972 délivré à la même firme, un dispositif autorégulé en température analogue au précédent, dans lequel l'isolant séparant les deux résistances C.T.P. est remplacé par de l'air.

De tels dispositifs ne sont pas utilisables pour constituer un connecteur enfichable, c'est-à-dire un dispositif autorégulé en température comportant un jack métallique destiné à recevoir une fiche de connexion électrique.

L'invention vise à la réalisation d'un tel dispositif.

Le dispositif autorégulé en température selon l'invention est du type comportant au moins une résistance à coefficient de température positif alimenté sous tension électrique constante. Il est caractérisé en ce qu'il comporte au moins une résistance à coefficient de température positif en forme de manchon entourant un matériau thermiquement conducteur et électriquement isolant à l'intérieur duquel est placé au moins un jack métallique destiné à recevoir une fiche de connexion électrique.

L'invention sera mieux comprise, et d'autres caractéristiques apparaîtront au moyen de la description qui suit et des dessins qui l'accompagnent parmi lesquels:

— les figures 1, 2, 3, 4, 5 et 11 sont des courbes explicatives;
— les figures 6 à 10 et 12 sont des exemples de réalisation de l'invention.

La température d'un dispositif autorégulé par C.T.P. est déterminée par trois facteurs principaux:

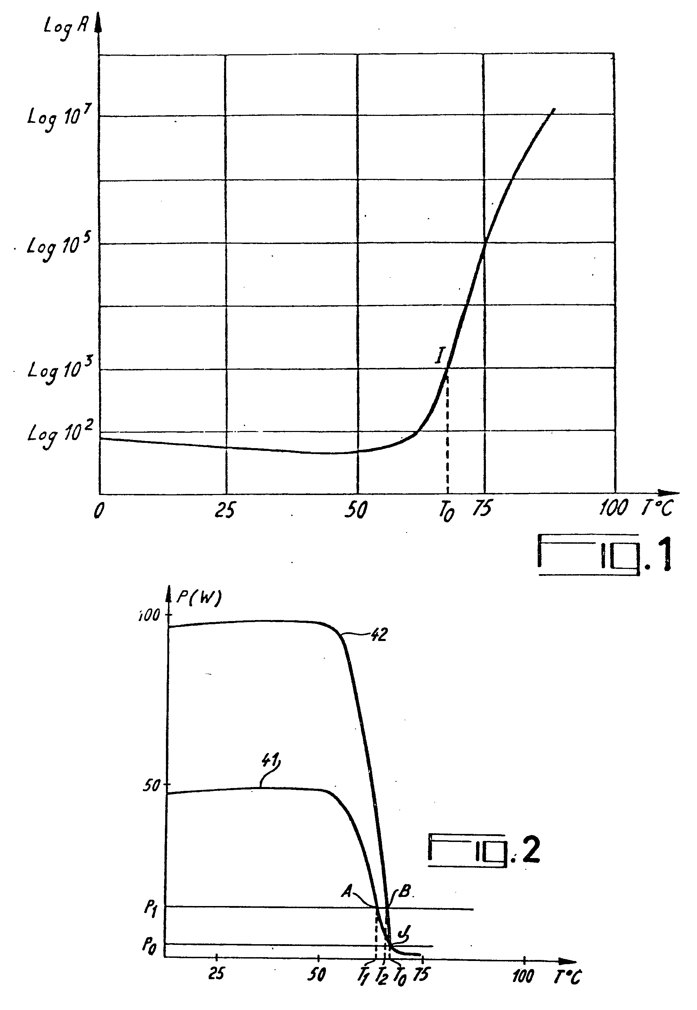

1. La caractéristique "résistance ohmique/température" (figure 1) du matériau C.T.P.;

2. La tension d'alimentation V aux bornes de la résistance C.T.P. détermine la puissance P, engendrée par effet Joule, pour une valeur R de la résistance ohmique;

3. La puissance $P_0$ dissipée par fuites thermiques, dans des conditions déterminées de ventilation et d'isolement.

Figure 1, on a porté en abscisses la température en degrés Celsius de 0 à 100°C et en ordonnées le logarithme de la valeur de la résistance en ohms, notamment de $10^2$ à $1$ ohms. On observe en I un point d'inflexion de la courbe pour une température de $T_0$ (de l'ordre de 60°C) correspondant à une résistance de 1000 ohms environ.

Figure 2, on a porté en abscisses les températures à la même échelle que figure 1, et en ordonnée la puissance en watts. Deux courbes de puissance 41 et 42 ont été dessinées, lesquelles correspondent à deux valeurs de la tension V, soit respectivement 50 et 70 volts.

Si les pertes thermiques ont en watts une valeur $P_1$, on voit facilement que la température est autorégulée selon la valeur de V, au point A ou au point B, soit aux valeurs $T_1$ ou $T_2$. En effet:

a) Si la température T tend à s'élever au dessus de l'abscisse du point A (ou B) l'augmentation correspondante de la résistance tend à faire baisser la puissance produite par effet Joule; or, les pertes thermiques ne diminuent pas, mais tendent plutôt à augmenter en fonction de l'élévation de température; donc la température tend à revenir à la valeur fixée par l'abscisse du point A (ou B).

b) Le phénomène inverse se produit si T tend à descendre en dessous de l'abscisse du point A (ou B).

Si on diminue les pertes thermiques, par exemple en isolant le composant ou en diminuant son rayonnement, on se rapproche de la valeur P correspondant à l'ordonnée du point J d'abscisse T, qui est celle du point d'inflexion I de la courbe de la figure 1.

Les courbes 41 et 42 étant pratiquement confondues au voisinage du point J, la température T est alors indépendante de la tension appliquée à partir d'un seuil ici de l'ordre de 50 volts.

Toutefois, on peut avoir avantage à se placer au voisinage des points A et B c'est-à-dire à ne pas trop diminuer les pertes thermiques du composant pour améliorer la stabilité de la température d'autorégulation par rapport à d'autres causes de perturbations, par exemple un courant d'air chaud ou froid.

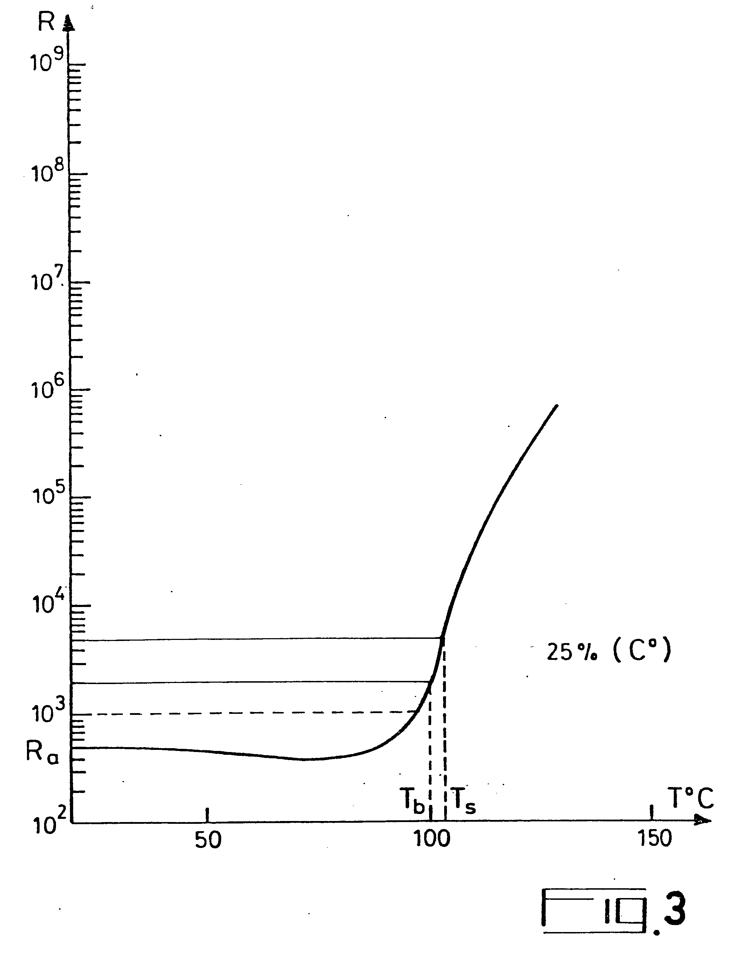

Sur la figure 3, on voit la courbe de variation typique de la valeur ohmique d'une résistance CTP en fonction de sa température propre, la courbe représentée ayant pour équation:

$$\text{Log } R = f(T)$$

Sur cette courbe on définit les paramètres suivants:

$R_a$: résistance de la C.T.P. à la température ambiante;

$T_b$: température de basculement, c'est la température pour laquelle la résistance électrique est égale au double de la résistance minimum et enfin:

$$\alpha = \frac{\Delta \text{Ln } R}{\Delta T} \cdot 100$$

ou

$$\alpha = \frac{2,3 \, \Delta \text{Log } R}{\Delta T} \cdot 100$$

qui est le coefficient de température ou pente pris dans un point de la courbe ou $R(T) = 4R_{min}$.

Cette courbe a tout d'abord une faible pente avant d'atteindre la température $T_b$ puis une pente beaucoup plus grande au point d'inflexion correspondant à une température $T_s$, dite température de stabilisation.

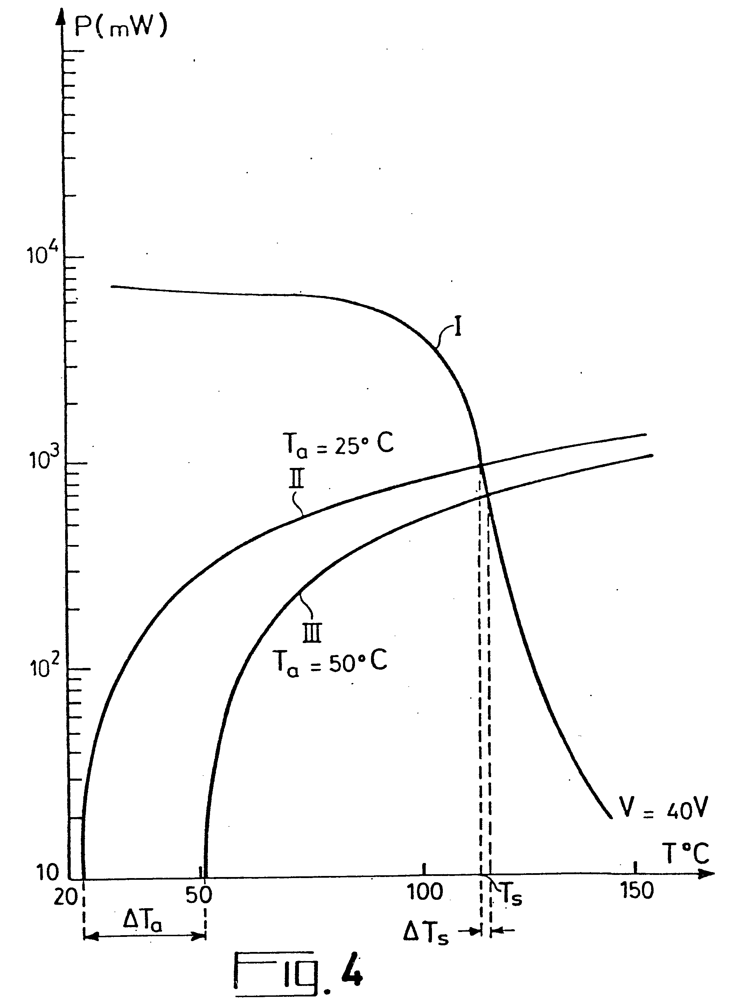

La figure 4 représente en I les variations de l'énergie engendrée par effet Joule par la C.T.P. pour une tension de 40 V appliquée à ses bornes, en fonction de sa température propre.

On trouve en $T_s$ un point d'inflexion avec une forte pente. Sa température finale est dûe à l'équilibre entre la puissance électrique fournie et la puissance thermique dissipée.

Les courbes II et III représentent respectivement la puissance thermique dissipée vers le lieu ambiant, pour deux températures ambiantes $T_a$ soit respectivement $T_a = 25°C$ et $T_a = 50°C$.

Pour ces deux courbes la puissance en milliwatts (ordonnées) est représentée avec une échelle logarithmique. Ce sont deux courbes logarithmiques, l'énergie dissipée étant une fonction linéaire de la différence $(T - T_a)$.

La courbe I ayant une pente négative très forte aux alentours de $Y_s$, les deux courbes II et III qui sont des courbes logarithmiques coupent la courbe I en des points correspondant à des températures $T_s$ et $T_s + \Delta T_s$.

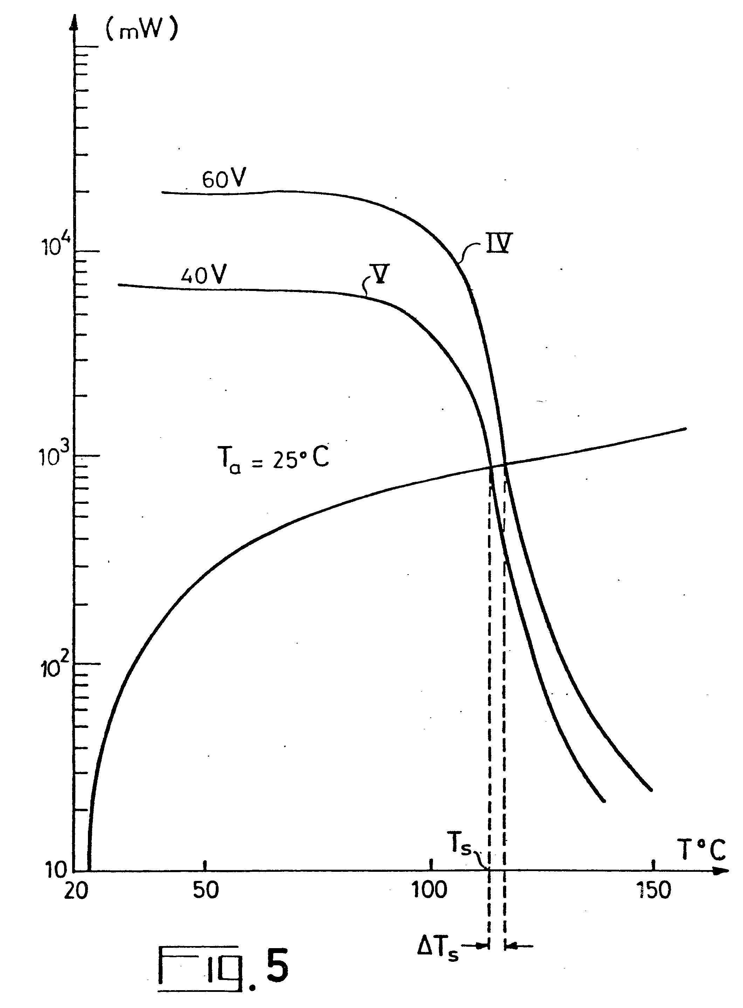

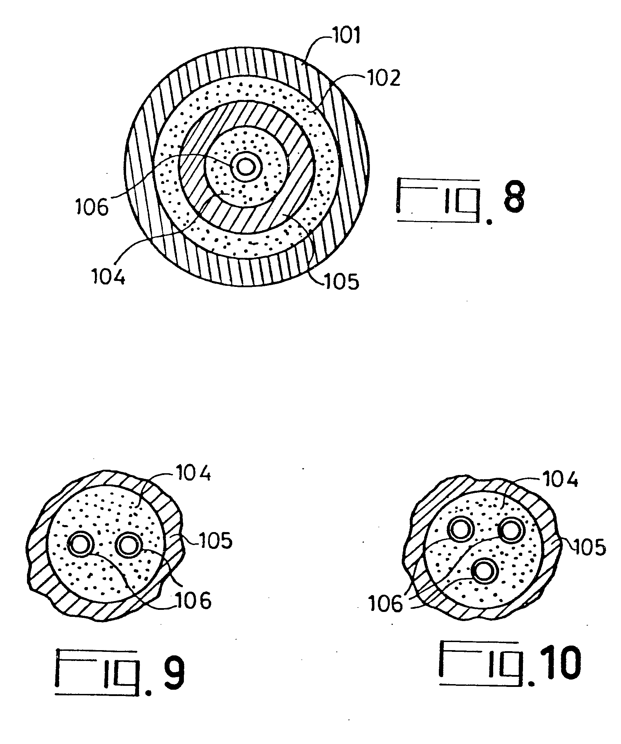

L'ensemble de courbes de la figure 5 représente en fonction de la température propre de la C.T.P., de la même façon que dans la figure 4, deux courbes IV et V représentant la puissance engendrée par effet Joule par la C.T.P. pour deux tensions différentes 60V et 40V et la courbe II de la figure 8 représentant la puissance dissipée à la température ambinate 25°C. On voit de même que l'équilibre correspondant à l'égalité de la puissance thermique dissipée et de la puissance engendrée par effet Joule est obtenu à la température $T_s$ et $T_s + \Delta T_s$.

On en arrive aux deux conclusions suivantes:

(a) la température $T_s$ de stabilisation est pratiquement indépendante de la tension appliquée.

(b) la température $T_s$ ne dépend pratiquement pas de la température ambiante, dans la gamme indiquée.

On définit deux facteurs de qualité pour de tels produits:

(a) le facteur
$$Q = \frac{\Delta Ta}{\Delta T_s}$$

la tension d'alimentation V restant fixe, qui est le rapport de variation de température ambinate à la variation de la température de stabilisation. Plus ce rapport est grand, meilleur est le composant;

(b) le facteur

$$q = \frac{\Delta V}{\Delta T_s},$$

la température ambiante restant fixe, qui est le rapport de variation d'alimentation à la variation correspondante de température de stabilisation.

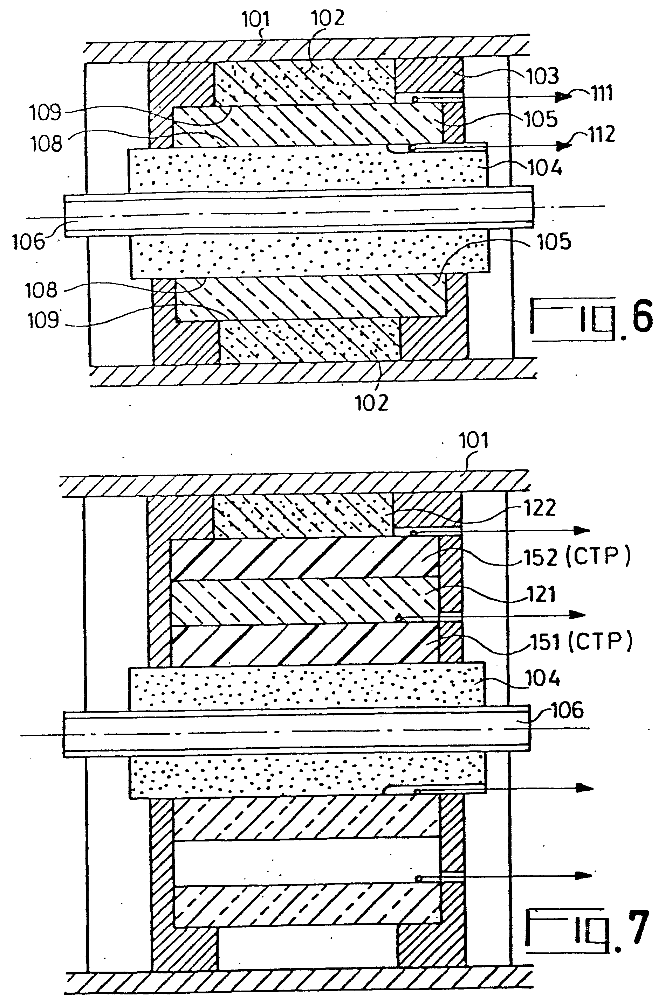

La figure 6 représente en coupe un connecteur enfichable comportant une C.T.P. qui se présente sous la forme d'un manchon cylindrique.

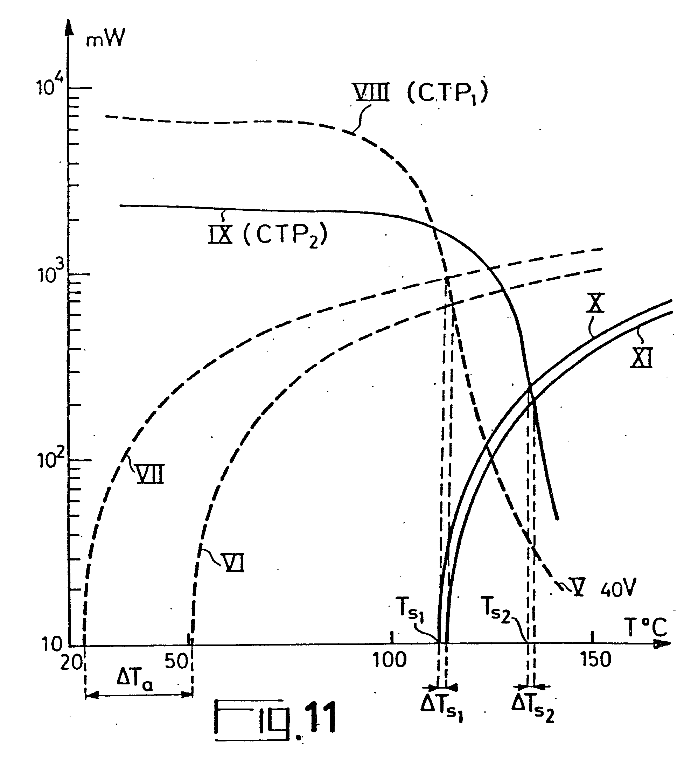

Il comporte en 101, une enveloppe métallique, en 102 un isolant thermique, en 103 deux embouts de centrage isolants, en 104 un manchon isolant électrique mais bon conducteur thermique alumine ou oxyde de béryllium, en 105 la C.T.P. proprement dite, formant manchon, en 106 un jack métallique. On a représenté par des traits renforcés 108 et 109, les métallisations intérieures et extérieures de la C.T.P., qui servent à son alimentation électrique par des connexions 111 et 112. On a représenté figure 8 une coupe du connecteur effectuée perpendiculairement à l'axe du manchon métallique 106. On peut également réaliser un connecteur comportant deux jacks 106 (figure 9) ou même trois (figure 10) ou davantage l'espace compris entre les jacks et la C.T.P. 105 étant bourré à l'aide du même matériau que le manchon 104.

Dans une variante de connecteur enfichable, on utilise deux CTP: à l'intérieur d'une C.T.P. creuse 152 (figure 7) on place une seconde C.T.P. 151, creuse également. Les deux C.T.P. sont en forme de tubes coaxiaux, analogues dans leur structure, les deux tubes étant séparés par une couche 121 d'isolant thermique. On peut appliquer cette disposition aux réalisations représentées dans les figures 9 et 10.

La C.T.P. extérieure joue un premier rôle de stabilisation et maintient en son intérieur une température $T_{s1}$. Le fonctionnement de l'ensemble se comprend aisément à l'aide de la figure 11.

Les courbes VIII et IX correspondent aux énergies fournies sous la même tension par les deux C.T.P. en fonction de leurs températures propres respectives.

Les courbes VI et VII sont les énergies dissipées par la première C.T.P. ou C.T.P.$_{.1}$ extérieure pour des températures ambiantes de 20°C et 50°C. La première C.T.P. a une température de stabilisation comprise entre $T_{s1}$ et $T_{s1}+\Delta T_{s1}$.

C'est cette température qui est sensiblement la température régnant autour de la deuxième C.T.P.$_{.2}$. La température de stabilisation définitive sera comprise entre $T_{s2}$ et $T_{s2}+\Delta T_{s2}$ où $\Delta T_{s2}$ sera de loin inférieure à $\Delta T_{s1}$.

Il est bien entendu nécessaire que la température de la C.T.P. intérieure soit supérieure à celle de la C.T.P. extérieure. Pour les connecteurs à deux C.T.P., on définit les mêmes paramètres de qualité que pour les simples connecteurs.

A titre d'exemple, on a réalisé les connecteurs suivants:

1er exemple: connecteur à C.T.P. unique:
. Composition chimique:

$$(ba_{0,90} Sr_{0,10}) 0,993 Y_{0,007} TiO_3 + 2\% TiO_2 + 0,004\% MnO + 1\% SiO_2.$$

. Caractéristiques géométriques du cylindre creux:

| | |
|---|---|
| Longueur: | 18 mm |
| Diamètre extérieur: | 7 mm |
| Diamètre intérieur: | 3 mm |

. Caractéristiques électriques:

$Ra = 500\ \Omega$
$Tb = 100°C$
$\alpha = 40\%$ degré

Tension d'alimentation V: 40V.

— Enveloppe extérieure
. Matériau: laiton
. dimensions géométriques:

| | |
|---|---|
| Longueur: | 30 mm |
| Diamètre extérieur: | 11 mm |
| Diamètre intérieur: | 9 mm |

— L'isolant entre l'enveloppe et la C.T.P. est l'air.
— Les isolants thermiques placés aux extrémités du connecteur servent aussi de support de la C.T.P. dans le connecteur.
. Matériau: téflon (marque commerciale)
. Dimensions géométriques:

| | |
|---|---|
| Epaisseur: | 3 mm |
| Diamètre extérieur: | 9 mm |
| Diamètre intérieur: | 3 mm |

Caractéristiques de la stabilisation de température du connecteur du présent exemple dans l'air à 25°C:

$Q = 20$
$q = 7V/°C$
$T_s = 110°C$

2 éme exemple: connecteur à deux C.T.P.:
. Caractéristiques des deux composants C.T.P.:
. Composition chimique de la C.T.P. externe:

$$(Ba_{0,85} Sr_{0,15})_{0,993} Y_{0,007} T_iO_3 + 2\% TiO_2 + 0.04\% MnO + 1\% SiO_2.$$

. Composition chimique de la C.T.P. interne.
. Caractéristiques géométriques de la C.T.P. externe:

| | |
|---|---|
| Longueur: | 18 mm |
| Diamètre extérieur: | 13 mm |
| Diamètre intérieur: | 9 mm |

. Caractéristiques géométriques de la C.T.P. interne:

| | |
|---|---|
| Longueur: | 18 mm |
| Diamètre extérieur: | 7 mm |
| Diamètre intérieur: | 3 mm |

. Caractéristiques électriques de la C.T.P. externe:

$Ra = 750\ \Omega$
$Tb = 85°C$
$\alpha = 22\%/°C$

. Caractéristiques électriques de la C.T.P. interne: celles de l'exemple précédent.

Les deux C.T.P. sont alimentées en parallèle sous 40 V.

— Enveloppe extérieure:
. Matériau: laiton
. Dimensions géométriques:

| | |
|---|---|
| Longueur: | 30 mm |
| Diamètre extérieur: | 18 mm |
| Diamètre intérieur: | 16 mm |

— Isolants thermiques entre l'enveloppe metallique et la C.T.P. externe et entre les deux C.T.P.: air.
— Isolants thermiques placés aux extrémités du connecteur servant aussi de support des C.T.P.:
. Matériau: téflon (marque commerciale)
. Dimensions géométriques:

| | |
|---|---|
| Epaisseur: | 3 mm |
| Diamètre extérieur: | 16 mm |
| Diamètre intérieur: | 3 mm |

. Caractéristiques de stabilisation du connecteur à 25°C:

$Q = 100$
$q = 8\ V/°C$
$T_s = 110°C.$

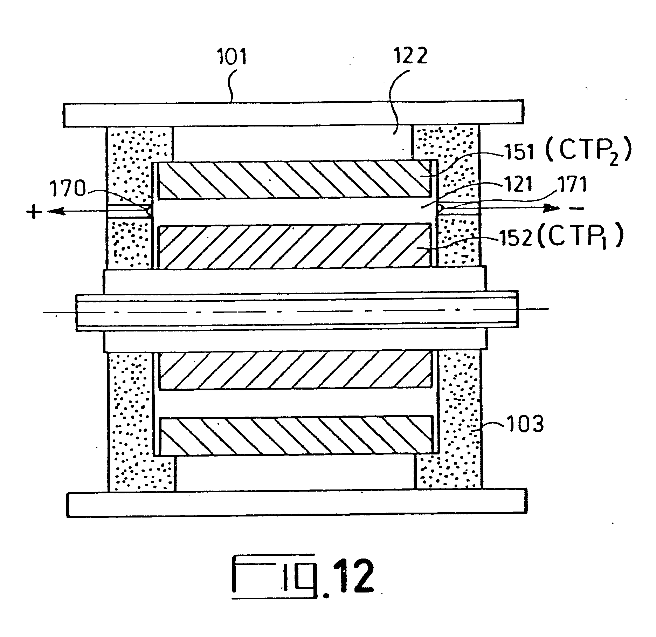

La figure 12 représente en coupe un composant à deux C.T.P. analogue à celui de la figure 7, mais dans lequel le courant d'alimentation circule, non plus radialement, mais dans l'axe de l'ensemble.

Le connecteur de la figure 12 comporte les mêmes organes que celui de la figure 7. Les deux C.T.P. sont alimentées par les faces planes. A cet effet, des métallisations 170 et 171 sont prévues aux extrémités des thermistances. Ces métallisations sont connectées aux bornes d'une alimentation non représentée. On obtient ainsi des résistances plus élevées que dans le cas précédent.

**Revendications**

1. Dispositif autorégulé en température, destiné à recevoir une fiche de raccordement électrique, du type comportant au moins une résistance à coefficient de température positif alimentée sous tension électrique constante, caractérisé en ce que la dite résistance à coefficient de température positif est réalisée en forme de manchon (105) entourant un matériau (104) thermiquement conducteur et électriquement isolant à l'intérieur duquel est placé au moins un jack métallique (106) destiné à recevoir ladite fiche.

2. Dispositif suivant la revendication 1, caractérisé en ce qu'il comporte une enveloppe métallique (101) à l'intérieur de laquelle se trouve, séparée par un isolant thermique (102) une première résistance à coefficient de température positif en forme de manchon (152) entourant une deuxième résistance (151) à coefficient de température positif séparée de cette dernière par un matériau thermiquement et électriquement isolant (121), la deuxième résistance (151) en forme de manchon, entourant un matériau thermiquement conducteur et électriquement isolant (104) à l'intérieur duquel est noyé au moins un jack métallique (106) destiné à recevoir ladite fiche.

3. Dispositif suivant la revendication 2, caractérisé en ce que l'isolant thermique (102) situé entre l'enveloppe et la résistance la plus proche est constitué par de l'air dans la partie médiane du dit dispositif et par des embouts (103) isolants thermiquement et électriquement placés aux extrémités de celui ci.

4. Dispositif suivant la revendication 1, caractérisé en ce que la résistance à coefficient de température positif est constituée par un matériau dont la composition est la suivante:

$(Ba_{0,9}+Sr_{0,1})_{0,993}$ $Y_{0,007}$: 97% environ
$TiO_2$: 2%
$SiO_2$: 1%
$MnO$: 0,04%

5. Dispositif suivant la revendication 2, caractérisé en ce que la première résistance est constituée par un matériau dont la composition chimique est la suivante:

$(Ba_{0,85}$ $Sr_{0,15})_{0,993}$ $Y_{0,007}$ $TiO_3$: 97% environ
$TiO_2$: 2%
$SiO_2$: 1%
$MnO$: 0,04%

et en ce que la deuxième résistance est constituée par un matériau dont la composition chimique est la suivante:

$(Ba_{0,9}+Sr_{0,1})_{0,993}$ $Y_{0,007}$ $TiO_3$: 97% environ
$TiO_2$: 2%
$SiO_2$: 1%
$MnO$: 0,04%

**Patentansprüche**

1. Vorrichtung mit selbsttätiger Temperaturregulierung, in die ein elektrischer Verbindungsstöpsel einsteckbar ist, mit wenigstens einem einen positiven Temperaturkoeffizienten besitzenden, mit einem elektrischen Strom konstanter Spannung gespeisten Widerstand, dadurch gekennzeichnet, dass der Widerstand mit positivem Temperaturkoeffizienten eine Muffe (105) bildet, die ein wärmeleitendes und elektrisch isolierendes Material (104) umgibt, innerhalb dessen wenigstens ein den Verbindungsstöpsel aufnehmender metallischer Kontaktstecker (106) angeordnet ist.

2. Vorrichtung nach Anspruch 1, dadurch gekennzeichnet, dass er eine metallische Hülle (101) aufweist, in welcher ein durch einen Wärmeisolator (102) getrennter, einen positiven Temperaturkoeffizienten besitzender erster Widerstand in Form einer Muffe (152) angeordnet ist, der einen zweiten, einen positiven Temperaturkoeffizienten besitzenden Widerstand (151) umgibt, welcher von demselben durch ein wärmeisolierendes und elektrisch isolierendes Material (121) getrennt ist, während der zweite muffenförmige Widerstand (151) ein wärmeleitendes und elektrisch isolierends Material (104) umgibt, in welchem wenigstens ein den Verbindungsstöpsel aufnehmender metallischer Kontaktstecker (106) eingebettet ist.

3. Vorrichtung nach Anspruch 2, dadurch gekennzeichnet, dass der zwischen der Hülle und dem nächstliegenden Widerstand angeordnete Wärmeisolator (102) aus im mittleren Teil der Vorrichtung befindlicher Luft und aus an den Enden der Vorrichtung angeordneten wärmeisolierenden und elektrisch isolierenden Kappen (103) besteht.

4. Vorrichtung nach Anspruch 1, dadurch gekennzeichnet, dass der einen positiven Temperaturkoeffizienten besitzende Widerstand aus einem Material mit folgender Zusammensetzung besteht:

$(Ba_{0,9}+Sr_{0,1})_{0,993}Y_{0,007}$: etwa 97%
$TiO_2$: 2%
$SiO_2$: 1%
$MnO$: 0,04%

5. Vorrichtung nach Anspruch 2, dadurch gekennzeichnet, dass der erste Widerstand aus einem Material mit folgender chemischer Zusammensetzung besteht:

$(Ba_{0.85} Sr_{0.15})_{0.993} Y_{0.007} TiO_3$: etwa 97%
$TiO_2$: 2%
$SiO_2$: 1%
$MnO$: 0,04%

und dass der zweite Widerstand aus einem Material mit folgender chemischer Zusammensetzung besteht:

$(Ba_{0.9}+Sr_{0.1})_{0.993} Y_{0.007} TiO_3$: etwa 97%
$TiO_2$: 2%
$SiO_2$: 1%
$MnO$: 0,04%

## Claims

1. Device for temperature self-regulation, adapted to receive an electric connecting plug, of the type comprising at least one resistor having a positive temperature coefficient which is fed with a constant electric tension, characterized in that said resistor having a positive temperature coefficient has the configuration of a sleeve (105) surrounding a heat conducting and electrically insulating material (104) within which is disposed at least one metallic jack (106) adapted to receive said plug.

2. Device according to claim 1, characterized in that it comprises a metallic envelope (101) within which is disposed, and separated by a heat insulator (102), a first resistor having a positive temperature coefficient and the shape of a sleeve (152) surrounding a second resistor (151) having a positive temperature coefficient and separated therefrom by a heat insulating and electrically insulating material (121), the second resistor (151) in the form of a sleeve surrounding a heat conducting and electrically insulating material (104) in which is embedded at least one metallic jack (106) adapted to receive said plug.

3. Device according to claim 2, characterized in that the heat insulator (012) located between the envelope and the nearest resistor is constituted by air in the median part of said device and by heat insulating and electrically insulating caps (103) provided at the ends thereof.

4. Device according to claim 1, characterized in that the resistor having a positive temperature coefficient is constituted by a material having the following composition:

$(Ba_{0.9}+Sr_{0.1})_{0.993} Y_{0.007}$: about 97%
$TiO_2$: 2%
$SiO_2$: 1%
$MnO$: 0.04%

5. Device according to claim 2, characterized in that the first resistor is constituted by a material having the following chemical composition:

$(Ba_{0.85} Sr_{0.15})_{0.993} Y_{0.007} TiO_3$: about 97%.
$TiO_2$: 2%
$SiO_2$: 1%
$MnO$: 0.04%

and in that the second resistor is constituted by a material having the following chemical composition:

$(Ba_{0.9}+Sr_{0.1})_{0.993} Y_{0.007} TiO_3$: about 97%.
$TiO_2$: 2%
$SiO_2$: 1%
$MnO$: 0.04%.

**FIG.1**

**FIG.2**

Fig. 4

Fig. 5

Fig.6

Fig.7

Fig. 8

Fig. 9

Fig. 10

Fig. 11

Fig.12